(19) Europäisches Patentamt
European Patent Office
Office européen des brevets

(11) EP 2 876 477 A1

(12) EUROPEAN PATENT APPLICATION

(43) Date of publication:
27.05.2015 Bulletin 2015/22

(51) Int Cl.:
G02B 9/56 (2006.01)          G02B 13/00 (2006.01)
G03B 42/00 (2006.01)

(21) Application number: 14193973.6

(22) Date of filing: 20.11.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 22.11.2013 JP 2013241942

(71) Applicant: Fujifilm Corporation
Minato-ku
Tokyo 106-8620 (JP)

(72) Inventors:
• Ishikawa, Hiromi
  Kanagawa 258-8538 (JP)
• Ohta, Yasunori
  Kanagawa 258-8538 (JP)
• Inoue, Tomoki
  Kanagawa 258-8538 (JP)

(74) Representative: Klunker . Schmitt-Nilson . Hirsch
Patentanwälte
Destouchesstraße 68
80796 München (DE)

(54) **Scanning optical system, optical scanning apparatus, and radiation image readout apparatus**

(57) [Objective]
To obtain a scanning optical system capable of being configured to be compact and of sufficiently decreasing the beam diameter of light on a scanning target surface.
[Constitution]
A scanning optical system includes: a galvanometer mirror that reflects and deflects a light beam emitted from a light source with a mirror (4a), and an fθ lens that focuses the deflected light beam on a scanning target surface. The fθ lens is constituted by a first lens (L1), which is a spherical lens having a positive refractive power, a second lens (L2), which is a spherical lens having a negative refractive power, a third lens (L3), which is a spherical lens having a negative refractive power, and a fourth lens (L4), which is a spherical lens having a positive refractive power, provided in this order from the side of the galvanometer mirror. The scanning optical system satisfies Conditional Formula (1) below:

$$2.529 \leq f/f1 \leq 8.437 \qquad (1)$$

wherein f is the focal length of the entire fθ lens, and f1 is the focal length of the first lens (L1).

FIG.1    EXAMPLE 1

EP 2 876 477 A1

**Description**

BACKGROUND OF THE INVENTION

Technical Field

The present invention is related to an optical scanning apparatus that scans scanning target surfaces, which are made of recording materials or the like, with a light beam.

The present invention is also related to a scanning optical system, which is employed in such an optical scanning apparatus, that includes an fθ lens.

The present invention is also related to a radiation image readout apparatus that employs such an optical scanning apparatus, to read out radiation images which are recorded on stimulable phosphor sheets.

Background Art

Various conventional optical scanning apparatuses that cause light beams to enter mechanical optical deflectors, such as a galvanometer mirror having a reciprocating mirror and a polygon mirror having a rotating mirror, to reflect and deflect the light beam, and scan scanning target surfaces with the deflected light beams have been proposed. This type of optical scanning apparatus is often applied to optical scanning readout apparatuses that scan recording materials, in which information is recorded, and read out the information recorded in the recording materials by detecting light emitted by the recording material which has received irradiation of light, light transmitted through scanning target surfaces, or light reflected by scanning target surfaces. In addition, this type of optical scanning apparatus is also often applied to optical scanning recording apparatuses that write information into recording materials such as photosensitive materials that react to light, by scanning the recording materials with light which is modulated based on the information to be recorded.

Generally, in optical scanning apparatuses that employ the optical deflectors described above, the deflected light beams are caused to pass through scanning lenses to focus them to have small spot diameters (referred to as "beam diameter" in the present specification), in order to maintain high precision in readout and recording. Lenses having fθ properties are commonly employed as the scanning lenses, such that the light beams are scanned at a constant speed on scanning target substances when the light beams are deflected at a constant angular speed. fθ properties are those that cause the image heights of a light beam on a scanning target surface to be proportional to deflection angles θ. Lenses having such properties are referred to as fθ lenses.

Meanwhile, radiation image readout apparatuses that read out radiation images which are recorded on stimulable phosphor sheets are known as a type of optical scanning readout apparatus, as disclosed in Patent Document 1, for example. As disclosed in Patent Document 1, a stimulable phosphor sheet has a layer of accumulative phosphors (photostimulable phosphors) that accumulates the energy of radiation irradiated thereon. If radiation which has passed through a subject, for example, is irradiated onto this layer, the energy of the radiation is accumulated, to record a transmitted radiation image of the subject in the stimulable phosphor layer. A radiation image readout apparatus scans a stimulable phosphor sheet, on which a radiation image has been accumulated and recorded, two dimensionally with a light beam as excitation light. Photostimulated light emitted by the stimulable phosphors which are excited by the irradiation of the light beam is detected at each fine portion of the sheet, to obtain image signals that represent the recorded radiation image information.

Radiation image recording/readout systems that employ the stimulable phosphor sheets are widely utilized not only to record and read out transmitted radiation images of human bodies in the medical/clinical fields, but are also employed in non destructive inspection of component parts in factories, plants such as power plants and oil refineries, and further in ships, aircraft, etc.

The methods defined in ISO 17636-2 and EN (European Standards) 14784-1 are known as methods for evaluating resolution performance in industrial radiation image recording/readout systems. In these methods, it is desired for the resolution performance to be measured by two wires determined by EN 462-5, which are referred to as a duplex wire (refer to "Non Destructive Inspections", Vol. 61, No. 4, p. 146, 2012). The method for evaluating resolution performance employing the two wires records an image of the two wires arrayed next to each other on a stimulable phosphor sheet. Then, readout signals related to the arrangement direction of the wires are obtained by a readout process. Then, the percentage (%) of signal amplitude if the gap between the wires with respect to the signal intensity amplitude of the readout signals that represent the entirety of the wire portion is investigated. It is commonly said that a percentage of 20% or greater is necessary to reproduce radiation images having high resolution.

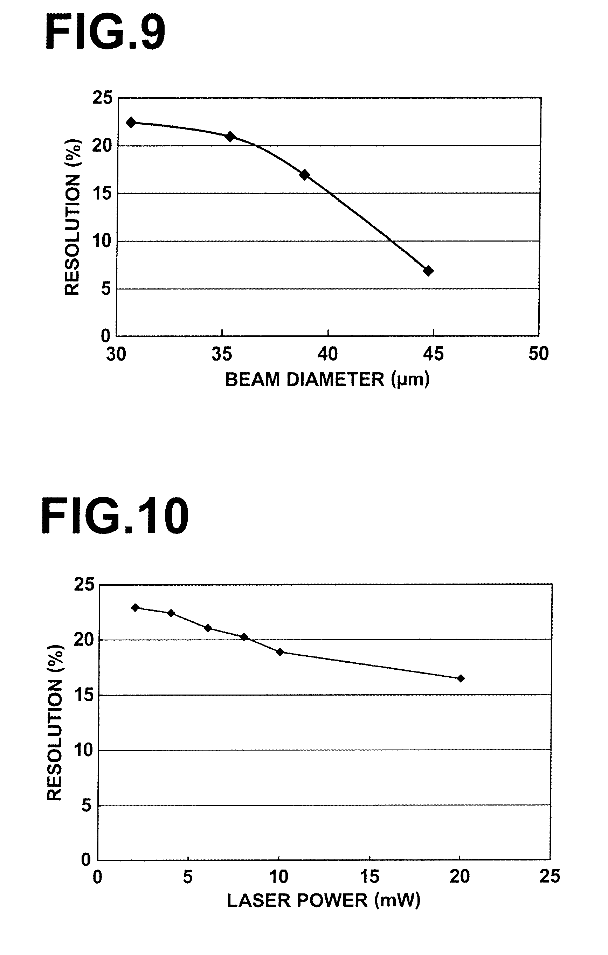

The present inventors investigated the relationship between the resolution properties defined by the above percentage (%) and the beam diameter of excitation light in greater detail by conducting experiments. Two wires having diameters of 50μm were used, and the interval therebetween was set to 50μm. In these experiments, "UR-1", which is a high resolution type stimulable phosphor sheet (in which BaFX:Eu$^{2+}$ (wherein X is Br and I) is the stimulable phosphor) produced by FUJIFILM Corporation, was employed as the stimulable phosphor sheet, the power of a laser light source that emits a readout light beam having a wavelength of 660nm was set to 2mW, the pixel size was set to 25$\mu$m·25$\mu$m, and the readout speed per pixel was set to 0.7$\mu$s (microseconds). Figure 9 illustrates the results of these experiments. It can be understood from the experimental results that it is necessary to set the beam diameter to 36$\mu$m or less in order to secure resolution properties of 20% or greater.

There are various types of known scanning optical systems equipped with f$\theta$ lenses. For example, Patent Document 2 discloses a scanning optical system constituted by a galvanometer mirror and four lens elements. Here, the four lens elements are: a spherical lens having a negative power (refractive power); a spherical lens having one planar surface and a positive power; a cylindrical lens having one planar surface and a negative power in a plane perpendicular to a deflecting plane; and a cylindrical mirror having a positive power in a plane perpendicular to the deflecting plane, provided in this order from the galvanometer mirror.

Patent Document 3 discloses a scanning optical system constituted by: a first lens group having a negative power; a second lens group formed by a meniscus component having a concave surface toward a light input side; a third lens group formed by a meniscus component having a concave surface toward the light input side; and a fourth lens group having a positive power, provided in this order from the light input side. In addition, conditions related to the focal lengths and the radii of curvature of a portion of the lenses are defined in the scanning optical system disclosed in Patent Document 3.

Patent Document 4 discloses a scanning optical system constituted by: a first lens, which is a meniscus lens having a positive power; a second lens having a negative power; a third lens, which is cemented to the second lens, having a positive power; and a fourth lens, which is a biconvex lens having a positive power, provided in this order from a light input side. In addition, conditions related to the refractive indices, the Abbe's numbers, and the focal lengths of a portion of the lenses are defined in the scanning optical system disclosed in Patent Document 4.

Patent Document 5 discloses a scanning optical system constituted by: a first lens group; and a second lens group, provided in this order from a light input side. The first lens group is constituted by: a positive meniscus lens having a concave surface toward the light input side; a negative meniscus lens having a concave surface toward the light input side; and a negative lens, provided in this order from the light input side. The second lens group is constituted by two or less positive lenses.

[Background Art Documents]

[Patent Documents]

[Patent Document 1]

Japanese Unexamined Patent Publication No. 2003-228145

[Patent Document 2]

Japanese Unexamined Patent Publication No. 1(1989)-309021

[Patent Document 3]

Japanese Patent Publication No. 60(1985)-053294

[Patent Document 4]

Japanese Unexamined Patent Publication No. 62(1987)-262812

[Patent Document 5]

Japanese Unexamined Patent Publication No. 10(1998)-186258

SUMMARY OF THE INVENTION

Incidentally, in inspections of components in fields related to aerospace technology, it is often the case that it is sufficient to set the power of lasers during readout to approximately 2mW as described above, because the thicknesses of the components are comparatively thin. That is, when recording radiation images of comparatively thin components, radiation such as X rays and γ rays pass favorably through the components. Therefore, the dosage of radiation irradiated onto stimulable phosphor sheets is great, and read out image signals having high S/N ratios can be obtained even if the power of the lasers is set to approximately 2mW, which is a comparatively low power.

In contrast, in inspections in components in fields related to oil and electrical power, the dosage of radiation irradiated onto stimulable phosphor sheets when recording radiation images tends to be small, because the thicknesses of the components are comparatively thick. In such cases, setting the time during which radiation is irradiated to be longer to increase the dosage of radiation irradiated onto the stimulable phosphor sheets may be considered in order to obtain read out image signals having S/N ratios which are as high as those obtained in cases that components are thin. However, if such a measure is taken, the amount of time required to record radiation images will become long. It is effective to set the power of a laser during readout to be high to increase the intensity of stimulated light emitted by a stimulable phosphor sheet such that read out image signals having a high S/N ratio can be obtained even if the dosage of radiation irradiated onto the stimulable phosphor sheet is decreased, in order to obtain read out image signals having a high S/N ratio while maintaining the amount of time that radiation is irradiated comparatively short.

A case in which the power of a laser during readout is increased in response to a demand to set the amount of time that radiation is irradiated to be approximately the same in cases that components, of which images are to be recorded, are thick and cases that components are thin. However, if the thicknesses of components are the same, the amount of time that radiation is irradiated can be set to be even shorter by increasing the power of a laser during readout. That is, in the case that it is sufficient for the power of a laser during to be set to 2mW if the amount of time that radiation is irradiated is 10 minutes, the amount of time that irradiation is irradiated can be shortened to two minutes and 30 seconds, which is 1/4 of 10 minutes, by setting the power of the laser during readout to be 8mW, which is four times 2mW.

However, it is necessary for a required resolution to be secured even if the power of the laser is set high. It can be understood from Figure 9 that in the case that a beam diameter is set to 36μm or less, higher resolution can be obtained as the beam diameter becomes finer. Therefore, the present inventors conducted experiments with conditions other than the beam diameter and the power of a laser being the same as those for Figure 9 to investigate changes in resolution according to the power of a laser in detail, by setting the power of a laser to various values while maintaining the beam diameter at 30μm. Table 10 and Figure 10 show the results of these experiments. It can be understood from the experimental results that a resolution of 20% or greater ca be secured even if the power of a laser is increased to approximately 8mW, if the beam diameter can be set to 30μm or less.

Scanning optical systems equipped with the previously described fθ lenses are in wide use in radiation image readout apparatuses that scan the aforementioned stimulable phosphor sheets. In such cases, it is desirable for the beam diameter of the scanning optical systems to be capable of being set to 30μm or less, in view of the above point.

However, it is difficult for the scanning optical system disclosed in Patent Document 2 to set the beam diameter on a scanning target surface to 30μm or less.

Meanwhile, the length of the optical path of the entire scanning optical system disclosed in Patent Document 3 is long. Therefore, a problem that the apparatus is likely to become large is recognized to exist.

In addition, the scanning optical systems disclosed in Patent Documents 4 and 5 have large angles of view. Therefore, a problem that it is difficult to combine these scanning optical systems with galvanometer mirrors that have ranges of deflection angles of generally 40° (±20° from the center of reciprocal deflection) or less, which is comparatively smaller than those of polygon mirrors, is recognized to exist.

The present invention has been developed in view of the foregoing circumstances. It is an object of the present invention to provide a scanning optical system that employs a galvanometer mirror as an optical deflector, which can be formed to be compact, and is capable of achieving a sufficiently small beam diameter on a scanning target surface, an optical scanning apparatus, and a radiation image readout apparatus.

A scanning optical system of the present invention comprises:

a galvanometer mirror that reflects and deflects a light beam emitted from a light source, having a deflection angle range of 40° or less; and

an fθ lens that focuses the deflected light beam on a scanning target surface;

the fθ lens substantially consisting of a first lens, which is a spherical lens having a positive refractive power, a second lens, which is a spherical lens having a negative refractive power, a third lens, which is a spherical lens having one of a positive refractive power and a negative refractive power, and a fourth lens, which is a spherical lens having a positive refractive power, provided in this order from the side of the galvanometer mirror; and

the scanning optical system satisfying Conditional Formula (1) below:

$$2.529 \leq f/f1 \leq 8.437 \qquad (1)$$

wherein f is the focal length of the entire fθ lens, and f1 is the focal length of the first lens.

Here, the expression "substantially consisting of..." refers to cases including those in which the fθ lens also includes lenses that practically do not have any power and optical elements other than lenses such as a cover glass, in addition to the first through fourth lenses.

Note that it is desirable for the scanning optical system of the present invention to satisfy the following conditional formula.

$$0.005 \leq 1/f1 \leq 0.0164 \tag{2}$$

Further, it is desirable for the scanning optical system of the present invention to satisfy the following conditional formula, in addition to at least one of conditional formulae (1) and (2).

$$-9.100 \leq f/f2 \leq -4.312 \tag{3}$$

wherein f2 is the focal length of the second lens.

In addition, it is desirable for the scanning optical system of the present invention to satisfy the following conditional formula, in addition to at least one of conditional formulae (1) and (2).

$$-0.847 \leq f/f3 \leq 0.423 \tag{4}$$

wherein f3 is the focal length of the third lens.

In addition, it is desirable for the scanning optical system of the present invention to satisfy the following conditional formula, in addition to at least one of conditional formulae (1) and (2).

$$1.346 \leq f/f4 \leq 1.838 \tag{5}$$

wherein f4 is the focal length of the fourth lens.

It is desirable for the scanning optical system to be that which focuses the light beam on a stimulable phosphor sheet as the scanning target surface.

Meanwhile, an optical scanning apparatus according to the present invention is configured to scan a scanning target surface with a light beam via the scanning optical system of the present invention. Note that it is desirable for a stimulable phosphor sheet to be the scanning target surface which is scanned by the optical scanning apparatus according to the present invention.

In addition, a radiation image readout apparatus according to the present invention is equipped with the optical scanning apparatus of the present invention described above, and is configured to detect stimulated light emitted from portions of a stimulable phosphor sheet scanned by the optical scanning apparatus, to read out a radiation image which is recorded in the stimulable phosphor sheet.

In the scanning optical system of the present invention, the fθ lens is constituted by the first lens, which is a spherical lens having a positive refractive power, the second lens, which is a spherical lens having a negative refractive power, the third lens, which is a spherical lens having one of a positive refractive power and a negative refractive power, and the fourth lens, which is a spherical lens having a positive refractive power, provided in this order from the side of the galvanometer mirror. In addition, the scanning optical system satisfies Conditional Formula (1). Therefore, it becomes possible for the beam diameter on the scanning target surface to be set to the aforementioned 30μm or less. Further, the length from the galvanometer mirror to the scanning target surface can be made sufficiently short, enabling miniaturization. The above advantageous effects will be described in greater detail in connection with embodiments of the present invention.

Note that the demand to set beam diameters to be 30μm or less on scanning target surfaces is present in apparatuses other than the aforementioned radiation image readout apparatus. The scanning optical system is capable of meeting all such demands.

Meanwhile, the optical scanning apparatus and the radiation image readout apparatus of the present invention are those to which the scanning optical system of the present invention is applied. Therefore, the optical scanning apparatus and the radiation image readout apparatus of the present invention are capable of meeting the demand to set the beam diameter to be 30µm or less on a scanning target surface. Particularly, the radiation image readout apparatus is capable of obtaining high resolution read out images.

BRIEF DESCRIPTION OF THE DRAWINGS

Figure 1 is a sectional diagram that illustrates the lens configuration of a scanning optical system according to Example 1 of the present invention.

Figure 2 is a sectional diagram that illustrates the lens configuration of a scanning optical system according to Example 2 of the present invention.

Figure 3 is a sectional diagram that illustrates the lens configuration of a scanning optical system according to Example 3 of the present invention.

Figure 4 is a sectional diagram that illustrates the lens configuration of a scanning optical system according to Example 4 of the present invention.

Figure 5 is a sectional diagram that illustrates the lens configuration of a scanning optical system according to Example 5 of the present invention.

Figure 6 is a sectional diagram that illustrates the lens configuration of a scanning optical system according to Example 6 of the present invention.

Figure 7 is a sectional diagram that illustrates the lens configuration of a scanning optical system according to Comparative Example 1 with respect to the scanning optical system of the present invention.

Figure 8 is a sectional diagram that illustrates the lens configuration of a scanning optical system according to Comparative Example 2 with respect to the scanning optical system of the present invention.

Figure 9 is a graph for explaining desired beam diameters in optical scanning apparatuses.

Figure 10 is a graph that illustrates the relationship between the power of a laser and resolution.

Figure 11 is a graph that illustrates the relationship between values of f/f1 and beam diameters.

Figure 12 is a graph that illustrates the relationship between values of 1/f1 and beam diameters.

Figure 13 is a diagram that schematically illustrates the configuration of an optical scanning apparatus according to an embodiment of the present invention.

BEST MODE FOR CARRYING OUT THE INVENTION

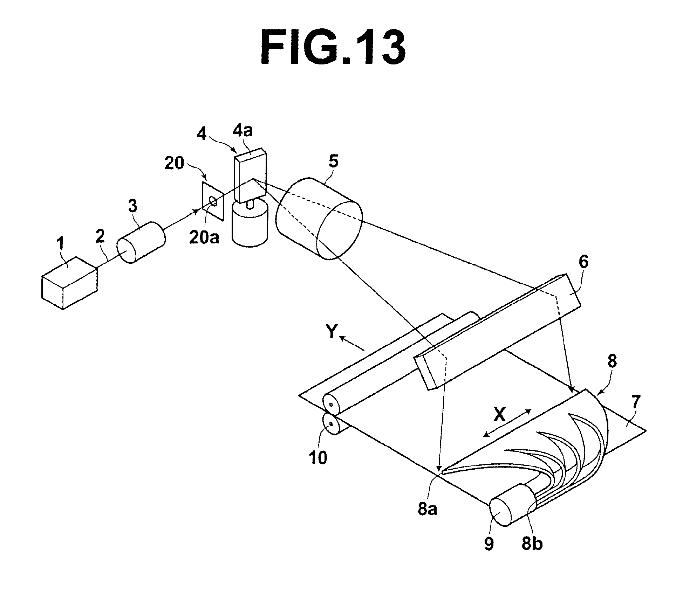

Hereinafter, embodiments of the present invention will be described in detail with reference to the attached drawings. A scanning optical system of the present invention is applied to a radiation image readout apparatus which was described previously, for example. First, the radiation image readout apparatus will be described with reference to Figure 13.

A semiconductor laser 1, which is a light source, emits a light beam 2 having a wavelength of 660nm, for example. The light beam 2 enters a collimating lens 3 and is collimated thereby, then enters a mirror 4a of a galvanometer mirror 4, which is an optical deflector. The mirror 4a swings reciprocally within a predetermined angular range, to reflect and deflect the light beam 2 that enters thereinto. The light beam which is deflected in this manner passes through a scanning lens 5, is reflected downward by an elongate planar mirror 6 to enter a scanning target surface 7, and scans the scanning target surface 7 (main scanning) in the direction indicated by the arrow X. Note that in Figure 13, the scanning lens 5 is schematically illustrated as a single lens. However, the scanning lens 5 is actually constituted by four lenses. The detailed configuration of the scanning lens 5 will be described later.

The scanning target surface 7 of the present example is a stimulable phosphor sheet which was described above. The stimulable phosphor sheet 7 is employed in non destructive inspection of component parts in factories, plants such as power plants and oil refineries, and further of industrial products that constitute ships, aircraft, etc. In such an inspection, a radiation image of radiation, such as X rays, which have passed through an inspection target, is irradiated onto the sheet 7. Thereby, radiation energy having an intensity distribution corresponding to transmitted radiation image information of the inspection target is accumulated and recorded in the stimulable phosphor sheet 7.

Note that even in the case that the target of inspection is comparatively thick, the amount of time that radiation is irradiated onto the stimulable phosphor sheet 7 can be set to approximately the same amount of time as that for a case in which the target of inspection is comparatively thin, by setting the power of the semiconductor laser 1 high during readout as described previously. In addition, in the case that the thicknesses of targets of inspection are the same, the amount of time that radiation is irradiated onto the stimulable phosphor sheet 7 can be shortened to a greater degree, by setting the power of the semiconductor laser 1 to be high.

When the stimulable phosphor sheet 7 having the transmitted radiation image of the inspection target recorded therein is main scanned by the light beam 2, photostimulated light having intensities corresponding to accumulated radiation energy is emitted from portions of the sheet 7 which are irradiated with the light beam. The photostimulated light is collected by a light collecting guide 8, and photoelectrically detected by a photomultiplier 9 at each main scanning position. Note that the light collecting guide 8 has a light input facet 8a that extends along a main scanning line on the stimulable phosphor sheet 7 and a light output facet 8b that outputs the photostimulated light which enters the light input facet 8a and propagates through the light collecting guide 8. The photomultiplier 9 is optically connected to the light output facet 8b.

At the same time, the stimulable phosphor sheet 7 is fed in the direction of arrow Y, which is substantially perpendicular to the direction of the main scanning by a sub scanning means 10 constituted by nip rollers, etc., to perform sub scanning. Thereby, the stimulable phosphor sheet 7 is optically scanned two dimensionally. The photomultiplier 9 outputs optical detection signals that represent the transmitted radiation image which was recorded in the stimulable phosphor sheet 7. The optical detection signals are sent to an image display device such as a liquid crystal display device and a CRT, or to an image recording means such as an optical scan recording apparatus as read out image signals, that is, provided to reproduce the radiation image.

The galvanometer mirror 4 and the scanning lens 5 described above constitute a scanning optical system according to an embodiment of the present invention. In addition, the semiconductor laser 1, the collimating lens 3, and the sub scanning means 10 are added to the scanning optical system to constitute an optical scanning apparatus according to an embodiment of the present invention. Note that the deflection angular range of the light beam 2 by the galvanometer mirror 4 is 40° or less, which is comparatively narrower than that of a polygon mirror or the like having a structure in which a mirror is rotated.

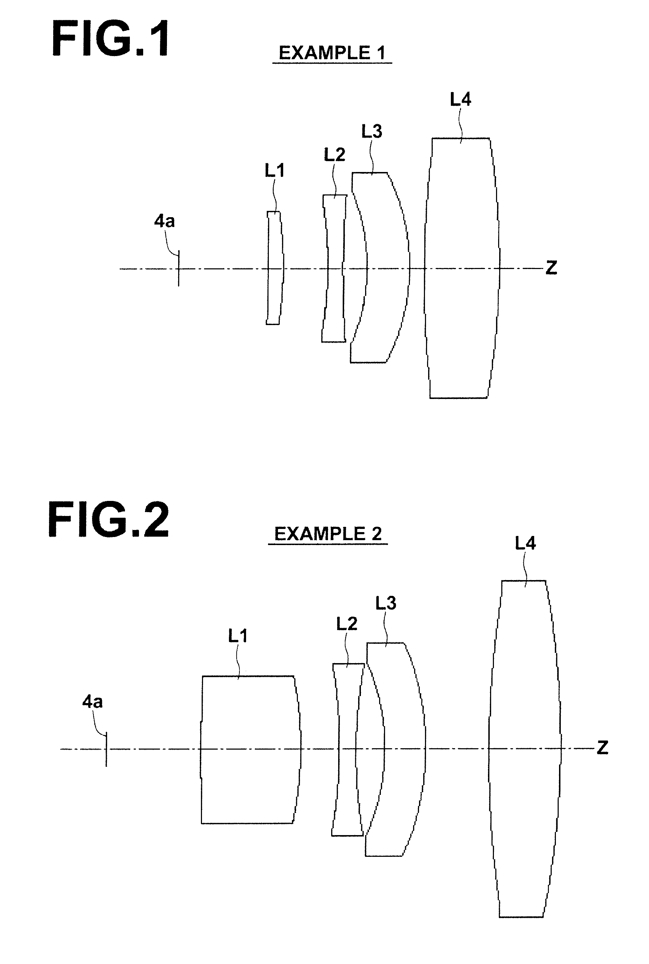

Next, a scanning optical system according to an embodiment of the present invention will be described with reference to Figure 1. Figure 1 is a sectional diagram that illustrates the configuration of a scanning optical system according to Example 1 of the present invention. In addition, Figure 2 through Figure 6 are sectional diagrams that illustrate the configurations of scanning optical systems according to other embodiments of the present invention, each of which corresponds to scanning optical systems according to Examples 2 through 6 to be described later.

Note that the basic configuration of the scanning optical system of the present invention and the advantageous effects obtained thereby will be described based on the scanning optical system of Example 1. Redundant descriptions will be omitted for the examples and comparative examples to be described later.

In Figure 1, the left side is the side of a light source, and the right side is the side of a scanning target surface. The scanning optical system of the present embodiment is constituted by the galvanometer mirror 4 (only the mirror 4a thereof is illustrated in Figure 1), a first lens L1 having a positive refractive power provided adjacent to the galvanometer mirror 4 toward the side of the scanning target surface, a second lens L2 having a negative refractive power adjacent to the first lens L1 toward the side of the scanning target surface, a third lens L3 having a positive refractive power provided adjacent to the second lens L2 toward the side of the scanning target surface, and a fourth lens L4 having a positive refractive power provided adjacent to the third lens L3 toward the side of the scanning target surface as practical lenses. Hereinafter, "having a positive refractive power" will simply be referred to as "positive". Similarly, "having a negative refractive power" will simply be referred to as "negative".

The lenses L1 through L4 are all spherical lenses, and together constitute the scanning lens 5 (refer to Figure 13) having fθ properties. Here, the combination of refractive powers of the four lenses in this order from the light input side is "positive", "negative", "positive", and "positive" in Example 1. In contrast, in Examples 2 through 6 and Comparative Examples 1 and 2, the combination of refractive powers is "positive", "negative", "negative", and "positive" in this order from the light input side.

The present embodiment satisfies the following conditional formula:

$$2.529 \leq f/f1 \leq 8.437 \tag{1}$$

wherein f is the focal length of the entire system of the scanning lens 5, and f1 is the focal length of the first lens L1.

Table 9 shows the values of the focal length f of the entire system, the focal length f1 of the first lens L1, the focal length f2 of the second lens L2, the focal length f3 of the third lens L3, the focal length f4 of the fourth lens L4, f/f1, f/f2, f/f3, f/f4, and 1/f1 (in units of millimeters) for present Example 1, Examples 2 through 6, and Comparative Examples 1 and 2 to be described later. In addition, in Table 9, conditions related to the aforementioned Conditional Formulae (1) through (5) are denoted with the numbers of the conditional formulae. Further, the minimum values and the maximum values in Examples 1 through 6 of particularly necessary conditions are indicated with darkened backgrounds in Table 9.

The beam diameter d was derived by calculations as a full width at half maximum for a case that the wavelength of the light beam 2 is 660nm as described above. In this case, an aperture plate 20 is provided in the optical path of the light beam 2 which is collimated by the collimating lens 3, as illustrated in Figure 13. The beam diameter d was calculated assuming that the diameter of an aperture 20a of the aperture plate 20 was 12mm. In addition, the angular range of deflection of the light beam 2 by the galvanometer mirror 4 is 40° (±20°), a main scanning length is 356mm, and the distance from the mirror 4a to the scanning target surface is approximately 650mm. The wavelength, the diameter of the aperture 20a, the range of deflection angles, the main scanning length, and the distance from the mirror 4a to the scanning target substance (approximately 650mm) are common for Examples 2 through 6 and Comparative Examples 1 and 2 to be described later.

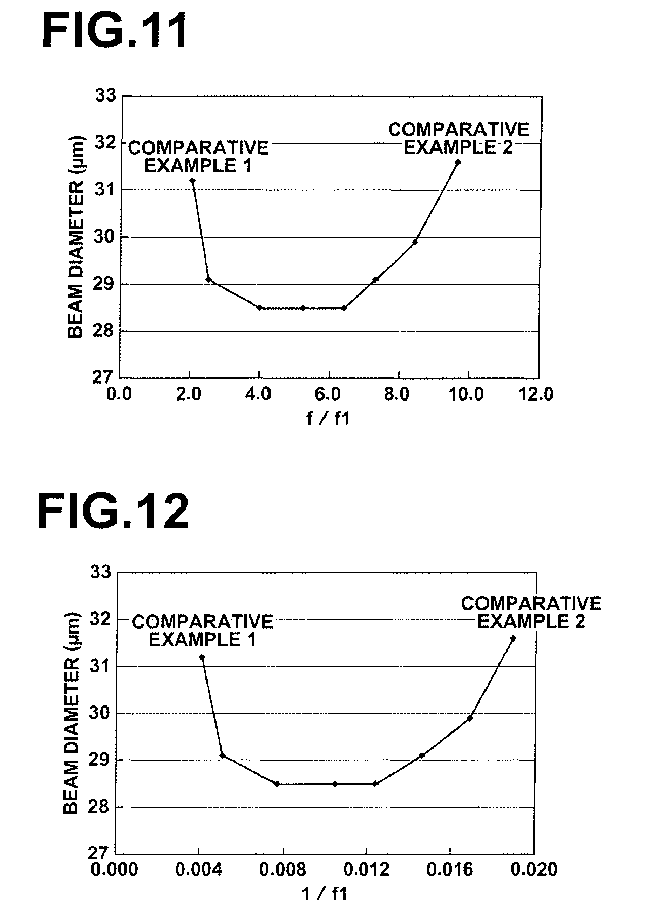

The relationship between the values of f/f1 and the beam diameter d is shown for the aforementioned eight examples in Figure 11. As can be understood from Figure 11 and Table 9, the beam diameter d on the stimulable phosphor sheet 7 can be set to 30μm or less if the value of f/f1 satisfies Conditional Formula (1). Thereby, it becomes possible to obtain readout image signals that represent readout images having high resolution even if the power of the laser during readout of radiation images is increased to approximately 8mW and the amount of time that radiation is irradiated is shortened. The detailed reasons for this advantageous effect have been described previously.

In Comparative Examples 1 and 2, in which the value of f/f1 is outside the range defined in Conditional Formula (1), the beam diameters d are 31.2μm and 31.6μm, respectively, which does not meet the demand to set the beam diameter d to be 30μm or less.

In addition, Table 9 also shows the focal length f of the entire lens system of the scanning lens 5. In the present embodiment, the focal length f is 505.7mm. As will be described later, the distance between the mirror 4a and the first lens L1 of the scanning lens 5 (the lens most toward the mirror 4a) in Example 1 is shown in Table 1, and this distance is 30.046mm. As described previously, the distance from the mirror 4a of the galvanometer mirror 4 and the scanning target surface is approximately 650mm in the present embodiment. The total of the distances Di among surfaces shown in Table 1 to be described later is also 650.027mm. However, the scanning optical system of the present invention is not limited to such a configuration, and it is easy to configure the scanning optical system such that this distance is less than 650mm. Accordingly, if the mirror 6 of Figure 13 is provided at a position at approximately half this distance, it is easy to set the length of the horizontal optical path from the mirror 4a to the mirror 6 and the length of the vertical optical path from the mirror 6 to the scanning target surface to be 350mm or less, respectively. Accordingly, miniaturization of the optical scanning apparatus can be realized.

The two advantageous effects described above, that the beam diameter d can be set to 30μm or less and that the optical scanning apparatus can be miniaturized can similarly be obtained by Examples 2 through 6 to be described later.

In addition, the scanning optical system of the present embodiment satisfies the following conditional formula.

$$0.005 \leq 1/f1 \leq 0.0164 \tag{2}$$

The relationship between values of 1/f1 and the beam diameter d is illustrated in Figure 12. As can be understood from Figure 12 and Table 9, the beam diameter d on the scanning target surface can be set to 30μm or less also in the case that the value of 1/f1 satisfies Conditional Formula (2).

In addition, by referring to Table 9, it can be understood that the beam diameter d can be set to 30μm or less also in cases that the following conditional formulae are satisfied individually or in combinations, in addition to at least one of Conditional Formulae (1) and (2)

$$-9.100 \leq f/f2 \leq -4.312 \tag{3}$$

$$-0.847 \leq f/f3 \leq 0.423 \tag{4}$$

$$1.346 \leq f/f4 \leq 1.838 \tag{5}$$

Next, specific examples of the scanning optical system of the present invention will be described. Note that the scanning optical systems of Examples 1 through 6 and Comparative Examples 1 and 2 are all constituted by four spherical lenses.

<Example 1>

Figure 1 is a sectional diagram of the scanning optical system of Example 1. Note that a detailed description regarding Figure 1 has already been given. Therefore, redundant descriptions will be omitted here, unless particularly necessary. The scanning optical system of Example 1 is constituted by: the mirror 4a of the galvanometer mirror 4; the first lens L1, which is a positive meniscus lens; the second lens L2, which is a negative biconcave lens; the third lens L3, which is a positive meniscus lens, and the fourth lens L4, which is a positive biconvex lens, provided in this order from the light beam input side to the scanning target surface.

Table 1 shows basic lens data of the scanning optical system of Example 1. Note that in the following description, the sides of the elements present between the mirror 4a and the scanning target surface 7 toward the mirror 4a are referred to as the rearward sides thereof, and the sides of the elements present between the mirror 4a and the scanning target surface 7 toward the scanning target surface 7 are referred to as the frontward sides thereof. In Table 1, ith (i=1, 2, 3,...) surface numbers that sequentially increase from the rearward side to the frontward side, with the surface of the mirror 4a designated as first and the rearward surface of the next constituent element present toward the frontward side designated as second, are shown in the column Si. The radii of curvature of ith surfaces are shown in the column Ri, and the distances between an ith surface and an i+1st surface along an optical axis Z are shown in the column Di. Note that with respect to the surface having surface number 9, the i+1st surface is the scanning target surface. The refractive indices of jth (j=1, 2, 3, 4) lenses from the rearward side to the frontward side with respect to the d line (wavelength: 587.6nm), j being a number that increases sequentially with the lens most toward the rearward side designated as first, are shown in the column Ndj. The Abbe's numbers of the jth lenses with respect to the d line are shown in the column vdj.

Note that the units of the radii of curvature R and the distances D between adjacent surfaces are mm in Table 1. Table 1 shows numerical values which are rounded to a predetermined number of digits. The signs of the radii of curvature are positive in cases that the surface shape is convex toward the rearward side, and negative in cases that the surface shape is convex toward the frontward side. The manners in which the basic data are shown are the same for Tables 2 through 8 to be described later.

[Table 1]

| Example 1: Lens Data<br>Wavelength 660nm, Deflection Angle 40° (±20°), Aperture Diameter Φ 12mm | | | | |
|---|---|---|---|---|
| Si (Surface Number) | Ri (Radius of Curvature) | Di (Distance) | Ndj (Refractive Index) | vdj (Abbe's Number) |
| 1 | | 30.014 | | |
| 2 | -681.138 | 4.993 | 1.72825 | 28.32 |
| 3 | -119.295 | 10.597 | | |
| 4 | -113.811 | 4.980 | 1.72825 | 28.32 |
| 5 | 334.052 | 7.999 | | |
| 6 | -62.660 | 14.201 | 1.51680 | 64.20 |
| 7 | -61.240 | 3.855 | | |
| 8 | 276.791 | 24.986 | 1.51680 | 64.20 |
| 9 | -285.223 | 548.402 | | |

<Example 2>

Figure 2 is a sectional diagram of the scanning optical system of Example 2. The scanning optical system of Example 2 is constituted by: the mirror 4a of the galvanometer mirror 4; a first lens L1, which is a positive biconvex lens; a second lens L2, which is a negative biconcave lens; a third lens L3, which is a negative meniscus lens; and a fourth lens L4, which is a positive biconvex lens, provided in this order from the light beam input side to the scanning target surface. Table 2 shows basic lens data of the scanning optical system of Example 2.

[Table 2]

| Example 2: Lens Data<br>Wavelength 660nm, Deflection Angle 40° (±20°), Aperture Diameter Φ 12mm | | | | |
|---|---|---|---|---|
| Si (Surface Number) | Ri (Radius of Curvature) | Di (Distance) | Ndj (Refractive Index) | vdj (Abbe's Number) |
| 1 | | 30.988 | | |
| 2 | 635.929 | 33.390 | 1.72825 | 28.32 |

(continued)

| Example 2: Lens Data<br>Wavelength 660nm, Deflection Angle 40° (±20°), Aperture Diameter Φ 12mm | | | | |
|---|---|---|---|---|
| Si (Surface Number) | Ri (Radius of Curvature) | Di (Distance) | Ndj (Refractive Index) | vdj (Abbe's Number) |
| 3 | -105.468 | 12.695 | | |
| 4 | -145.801 | 5.530 | 1.72825 | 28.32 |
| 5 | 146.156 | 9.569 | | |
| 6 | -62.217 | 13.754 | 1.51680 | 64.20 |
| 7 | -76.046 | 20.956 | | |
| 8 | 308.539 | 23.903 | 1.51680 | 64.20 |
| 9 | -259.501 | 499.310 | | |

<Example 3>

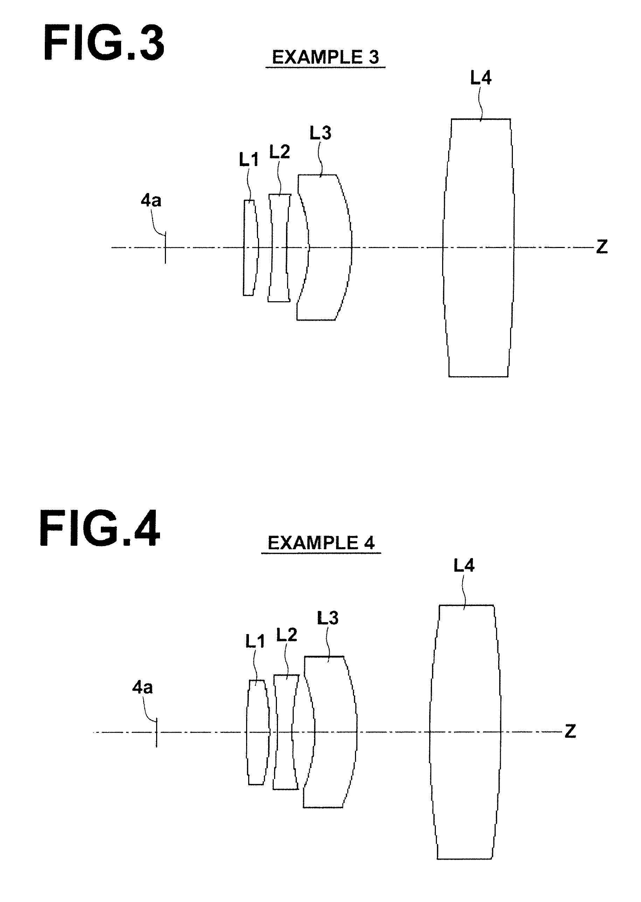

Figure 3 is a sectional diagram of the scanning optical system of Example 3. The scanning optical system of Example 3 is constituted by: the mirror 4a of the galvanometer mirror 4; a first lens L1, which is a positive biconvex lens; a second lens L2, which is a negative biconcave lens; a third lens L3, which is a negative meniscus lens; and a fourth lens L4, which is a positive biconvex lens, provided in this order from the light beam input side to the scanning target surface. Table 3 shows basic lens data of the scanning optical system of Example 3.

[Table 3]

| Example 3: Lens Data<br>Wavelength 660nm, Deflection Angle 40° (±20°), Aperture Diameter Φ 12mm | | | | |
|---|---|---|---|---|
| Si (Surface Number) | Ri (Radius of Curvature) | Di (Distance) | Ndj (Refractive Index) | vdj (Abbe's Number) |
| 1 | | 27.195 | | |
| 2 | 726.738 | 5.086 | 1.72825 | 28.32 |
| 3 | -77.980 | 4.952 | | |
| 4 | -124.636 | 5.024 | 1.72825 | 28.32 |
| 5 | 142.979 | 8.042 | | |
| 6 | -48.540 | 14.930 | 1.51680 | 64.20 |
| 7 | -58.758 | 31.813 | | |
| 8 | 308.357 | 25.059 | 1.51680 | 64.20 |
| 9 | -520.569 | 527.831 | | |

<Example 4>

Figure 4 is a sectional diagram of the scanning optical system of Example 4. The scanning optical system of Example 4 is constituted by: the mirror 4a of the galvanometer mirror 4; a first lens L1, which is a positive biconvex lens; a second lens L2, which is a negative biconcave lens; a third lens L3, which is a negative meniscus lens, and a fourth lens L4, which is a positive biconvex lens, provided in this order from the light beam input side to the scanning target surface. Table 4 shows basic lens data of the scanning optical system of Example 4.

[Table 4]

| Example 4: Lens Data Wavelength 660nm, Deflection Angle 40° (±20°), Aperture Diameter Φ12mm | | | | |
|---|---|---|---|---|
| Si (Surface Number) | Ri (Radius of Curvature) | Di (Distance) | Ndj (Refractive Index) | vdj (Abbe's Number) |
| 1 | | 30.998 | | |
| 2 | 161.097 | 8.008 | 1.72825 | 28.32 |
| 3 | -87.914 | 2.722 | | |
| 4 | -132.598 | 5.398 | 1.72825 | 28.32 |
| 5 | 89.402 | 7.998 | | |
| 6 | -54.233 | 14.732 | 1.51680 | 64.20 |
| 7 | -71.514 | 25.324 | | |
| 8 | 276.335 | 25.000 | 1.51680 | 64.20 |
| 9 | -342.328 | 529.820 | | |

<Example 5>

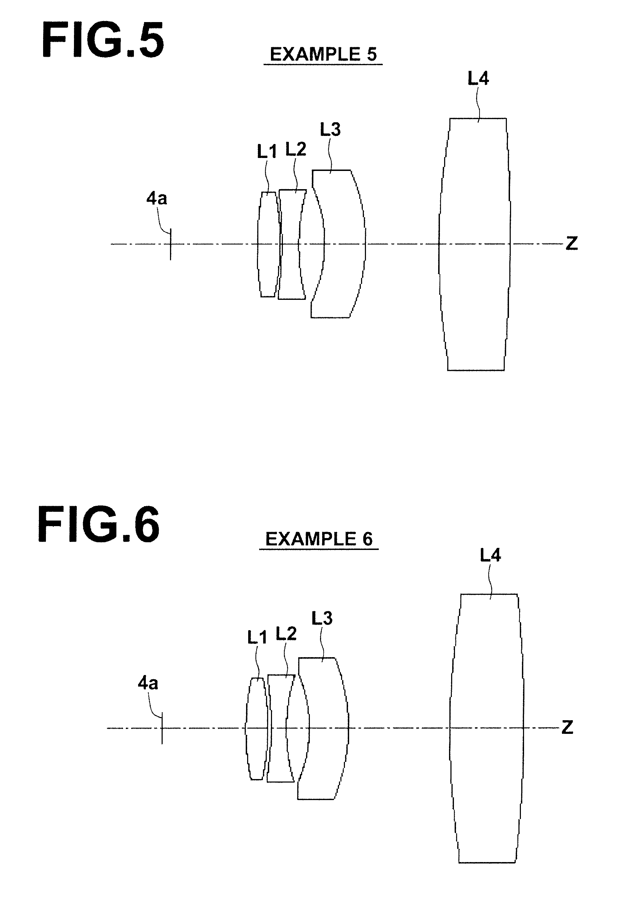

Figure 5 is a sectional diagram of the scanning optical system of Example 5. The scanning optical system of Example 5 is constituted by: the mirror 4a of the galvanometer mirror 4; a first lens L1, which is a positive biconvex lens; a second lens L2, which is a negative biconcave lens; a third lens L3, which is a negative meniscus lens; and a fourth lens L4, which is a positive biconvex lens, provided in this order from the light beam input side to the scanning target surface. Table 5 shows basic lens data of the scanning optical system of Example 5.

[Table 5]

| Example 5: Lens Data Wavelength 660nm, Deflection Angle 40° (±20°), Aperture Diameter Φ12mm | | | | |
|---|---|---|---|---|
| Si (Surface Number) | Ri (Radius of Curvature) | Di (Distance) | Ndj (Refractive Index) | vdj (Abbe's Number) |
| 1 | | 30.461 | | |
| 2 | 110.739 | 7.958 | 1.72825 | 28.32 |
| 3 | -90.124 | 0.616 | | |
| 4 | -139.123 | 5.944 | 1.72825 | 28.32 |
| 5 | 72.964 | 9.010 | | |
| 6 | -48.081 | 14.554 | 1.51680 | 64.20 |
| 7 | -62.195 | 25.740 | | |
| 8 | 242.641 | 25.005 | 1.51680 | 64.20 |
| 9 | -500.336 | 530.701 | | |

<Example 6>

Figure 6 is a sectional diagram of the scanning optical system of Example 6. The scanning optical system of Example 5 is constituted by: the mirror 4a of the galvanometer mirror 4; a first lens L1, which is a positive biconvex lens; a second lens L2, which is a negative biconcave lens; a third lens L3, which is a negative meniscus lens; and a fourth lens L4, which is a positive biconvex lens, provided in this order from the light beam input side to the scanning target surface. Table 6 shows basic lens data of the scanning optical system of Example 6.

[Table 6]

| Example 6: Lens Data Wavelength 660nm, Deflection Angle 40° (±20°), Aperture Diameter Φ 12mm | | | | |
|---|---|---|---|---|
| Si (Surface Number) | Ri (Radius of Curvature) | Di (Distance) | Ndj (Refractive Index) | vdj (Abbe's Number) |
| 1 | | 29.632 | | |
| 2 | 85.589 | 7.695 | 1.72825 | 28.32 |
| 3 | -86.493 | 1.122 | | |
| 4 | -115.483 | 5.319 | 1.72825 | 28.32 |
| 5 | 63.938 | 8.116 | | |
| 6 | -48.355 | 13.738 | 1.51680 | 64.20 |
| 7 | -62.760 | 35.716 | | |
| 8 | 276.017 | 26.003 | 1.51680 | 64.20 |
| 9 | -419.918 | 522.640 | | |

<Comparative Example 1>

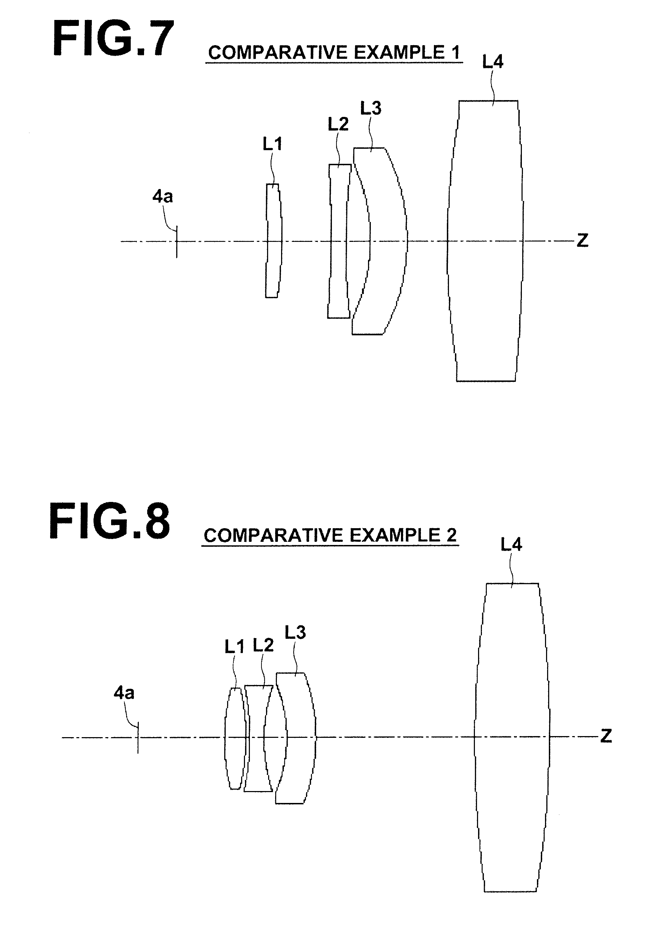

Figure 7 is a sectional diagram of the scanning optical system of Comparative Example 1. The scanning optical system of Comparative Example 1 is constituted by: the mirror 4a of the galvanometer mirror 4; a first lens L1, which is a positive meniscus lens; a second lens L2, which is a negative biconcave lens; a third lens L3, which is a negative meniscus lens, and a fourth lens L4, which is a positive biconvex lens, provided in this order from the light beam input side to the scanning target surface. Table 7 shows basic lens data of the scanning optical system of Comparative Example 1.

[Table 7]

| Comparative Example 1: Lens Data Wavelength 660nm, Deflection Angle 40° (±20°), Aperture Diameter Φ 12mm | | | | |
|---|---|---|---|---|
| Si (Surface Number) | Ri (Radius of Curvature) | Di (Distance) | Ndj (Refractive Index) | vdj (Abbe's Number) |
| 1 | | 29.956 | | |
| 2 | -286.753 | 4.922 | 1.72825 | 28.32 |
| 3 | -111.410 | 16.327 | | |
| 4 | -286.849 | 4.948 | 1.72825 | 28.32 |
| 5 | 182.789 | 8.047 | | |
| 6 | -54.516 | 12.294 | 1.51680 | 64.20 |
| 7 | -57.688 | 13.426 | | |
| 8 | 219.824 | 24.953 | 1.51680 | 64.20 |
| 9 | -444.053 | 535.249 | | |

<Comparative Example 2>

Figure 8 is a sectional diagram of the scanning optical system of Comparative Example 2. The scanning optical system of Comparative Example 2 is constituted by: the mirror 4a of the galvanometer mirror 4; a first lens L1, which is a positive biconvex lens; a second lens L2, which is a negative biconcave lens; a third lens L3, which is a negative meniscus lens, and a fourth lens L4, which is a positive biconvex lens, provided in this order from the light beam input side to the scanning target surface. Table 8 shows basic lens data of the scanning optical system of Comparative Example 2.

[Table 8]

| Comparative Example 2: Lens Data<br>Wavelength 660nm, Deflection Angle 40° (±20°), Aperture Diameter Φ 12mm | | | | |
|---|---|---|---|---|
| Si (Surface Number) | Ri (Radius of Curvature) | Di (Distance) | Ndj (Refractive Index) | vdj (Abbe's Number) |
| 1 | | 29.876 | | |
| 2 | 69.716 | 7.530 | 1.72825 | 28.32 |
| 3 | -81.079 | 1.462 | | |
| 4 | -87.646 | 5.036 | 1.72825 | 28.32 |
| 5 | 59.122 | 8.010 | | |
| 6 | -50.685 | 10.246 | 1.51680 | 64.20 |
| 7 | -62.375 | 55.908 | | |
| 8 | 366.640 | 26.038 | 1.51680 | 64.20 |
| 9 | -350.604 | 505.853 | | |

[Table 9]

| | Comparative Example 1 | Example 1 | Example 2 | Example 3 | Example 4 | Example 5 | Example 6 | Comparative Example 2 |
|---|---|---|---|---|---|---|---|---|
| f | 509.2 | 505.8 | 511.2 | 512 | 513.2 | 513 | 513.4 | 512.4 |
| f1 | 249.9 | 200 | 128 | 98 | 80.02 | 70.13 | 60.85 | 53.14 |
| f2 | -154.3 | -117.3 | -100.5 | -91.7 | -73.37 | -65.66 | -56.42 | -48.31 |
| f3 | 6100 | 1195 | -1005 | -1078 | -614.3 | -634.1 | -605.9 | -748.8 |
| f4 | 289.6 | 277.4 | 278.1 | 380.5 | 301.5 | 321.4 | 328.1 | 352.9 |
| f/f1 (1) | 2.038 | 2.529 | 3.994 | 5.224 | 6.413 | 7.315 | 8.437 | 9.642 |
| f/f2 (3) | -3.300 | -4.312 | -5.087 | -5.583 | -6.995 | -7.813 | -9.100 | -10.606 |
| f/f3 (4) | 0.083 | 0.423 | -0.509 | -0.475 | -0.835 | -0.809 | -0.847 | -0.684 |
| f/f4 (5) | 1.758 | 1.823 | 1.838 | 1.346 | 1.702 | 1.596 | 1.565 | 1.452 |
| | | | | | | | | |
| 1/f1 (2) | 0.0040 | 0.0050 | 0.0078 | 0.0102 | 0.0125 | 0.0143 | 0.0164 | 0.0188 |
| | | | | | | | | |
| Beam Diameter d | 31.2 | 29.1 | 28.5 | 28.5 | 28.5 | 29.1 | 29.9 | 31.6 |

[Table 10]

| Laser Power (mW) | Resolution (%) |
|---|---|
| 2 | 23.0 |
| 4 | 22.5 |
| 6 | 21.1 |
| 8 | 20.2 |
| 10 | 18.9 |
| 20 | 16.4 |

The present invention has been described above with reference to the embodiments and Examples thereof. However, the scanning optical system of the present invention is not limited to those of the above Examples, and various changes and modifications are possible. For example, the radius of curvature of each lens, the distances among surfaces, the refractive indices, and the Abbe's numbers can be changed as appropriate.

In addition, the scanning optical system of the present invention is not limited to application to the radiation image readout apparatus described above. The scanning optical system of the present invention may be applied to other types of readout apparatuses, and further to optical scanning recording apparatuses and the like. The same advantageous effects as those described above can be exhibited with respect to obtaining a desired scanning beam diameter.

**Claims**

1.    A scanning optical system, comprising:

a galvanometer mirror (4) that reflects and deflects a light beam (2) emitted from a light source (1), having a deflection angle range of 40° or less; and
an fθ lens (5) that focuses the deflected light beam (2) on a scanning target surface;
the fθ lens (5) substantially consisting of a first lens (L1), which is a spherical lens having a positive refractive power, a second lens (L2), which is a spherical lens having a negative refractive power, a third lens (L3), which is a spherical lens having one of a positive refractive power and a negative refractive power, and a fourth lens (L4), which is a spherical lens having a positive refractive power, provided in this order from the side of the galvanometer mirror (4); and
the scanning optical system satisfying Conditional Formula (1) below:

$$2.529 \leq f/f1 \leq 8.437 \tag{1}$$

wherein f is the focal length of the entire fθ lens (5), and f1 is the focal length of the first lens (L1).

2.    A scanning optical system as defined in Claim 1 that satisfies Conditional Formula (2) below:

$$0.005 \leq 1/f1 \leq 0.0164 \tag{2}.$$

3.    A scanning optical system as defined in either one of Claims 1 and 2 that satisfies Conditional Formula (3) below:

$$-9.100 \leq f/f2 \leq -4.312 \tag{3}$$

wherein f2 is the focal length of the second lens (L2).

4.    A scanning optical system as defined in any one of Claims 1 through 3 that satisfies Conditional Formula (4) below:

$$-0.847 \leq f/f3 \leq 0.423 \qquad (4)$$

wherein f3 is the focal length of the third lens (L3).

**5.** A scanning optical system as defined in any one of Claims 1 through 4that satisfies Conditional Formula (5) below:

$$1.346 \leq f/f4 \leq 1.838 \qquad (5)$$

wherein f4 is the focal length of the fourth lens (L4).

**6.** A scanning optical system as defined in any one of Claims 1 through 5 that focuses a deflected light beam (2) on a stimulable phosphor sheet (7) as the scanning target surface.

**7.** An optical scanning apparatus configured to scan a scanning target surface (7) with a light beam (2) via a scanning optical system as defined in any one of Claims 1 through 6.

**8.** An optical scanning apparatus as defined in Claim 7, wherein:

the scanning target surface is a stimulable phosphor sheet (7).

**9.** A radiation image readout apparatus, comprising an optical scanning apparatus as defined in Claim 8, and is configured to detect stimulated light emitted from portions of the stimulable phosphor sheet (7) scanned by the optical scanning apparatus, to read out a radiation image which is recorded in the stimulable phosphor sheet (7).

# FIG.1

EXAMPLE 1

# FIG.2

EXAMPLE 2

# FIG.3

EXAMPLE 3

L4

L3

L1 L2

4a

Z

# FIG.4

EXAMPLE 4

L4

L3

L1 L2

4a

Z

# FIG.5

### EXAMPLE 5

# FIG.6

### EXAMPLE 6

# FIG.7   COMPARATIVE EXAMPLE 1

# FIG.8   COMPARATIVE EXAMPLE 2

# FIG.9

# FIG.10

# FIG.11

# FIG.12

# FIG.13

Europäisches
Patentamt

European
Patent Office

Office européen
des brevets

# EUROPEAN SEARCH REPORT

Application Number

EP 14 19 3973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E<br>L | EP 2 811 329 A1 (FUJIFILM CORP [JP]) 10 December 2014 (2014-12-10)<br>* paragraphs [0035] - [0040], [0062]; figures 6,14; example 6; tables 6,11 *<br>----- | 1-9 | INV.<br>G02B9/56<br>G02B13/00<br>G03B42/00 |
| X | JP S60 135915 A (MATSUSHITA ELECTRIC IND CO LTD) 19 July 1985 (1985-07-19)<br>* figures 1,3; examples 1,3 *<br>----- | 1-9 | |
| X,D | JP H10 186258 A (ASAHI OPTICAL CO LTD) 14 July 1998 (1998-07-14)<br>* figure 1; example 1 *<br>----- | 1,2,5,7 | |

TECHNICAL FIELDS
SEARCHED      (IPC)

G02B
G03B

The present search report has been drawn up for all claims

| Place of search | Date of completion of the search | Examiner |
|---|---|---|
| Munich | 20 March 2015 | Casse, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 19 3973

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2015

| Patent document cited in search report | | Publication date | Patent family member(s) | | Publication date |
|---|---|---|---|---|---|
| EP 2811329 | A1 | 10-12-2014 | EP | 2811329 A1 | 10-12-2014 |
| | | | JP | 2014235351 A | 15-12-2014 |
| | | | US | 2014353512 A1 | 04-12-2014 |
| JP S60135915 | A | 19-07-1985 | JP | S635736 B2 | 04-02-1988 |
| | | | JP | S60135915 A | 19-07-1985 |
| JP H10186258 | A | 14-07-1998 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003228145 A
- JP 1309021 A
- JP 60053294 A
- JP 62262812 A
- JP 10186258 A

**Non-patent literature cited in the description**

- *Non Destructive Inspections,* 2012, vol. 61 (4), 146